# FASCICULE DE BREVET EUROPEEN

(11) **EP 2 870 071 B1**
(45) Date de publication et mention de la délivrance du brevet: **25.05.2016**
(21) Numéro de dépôt: 13732574.2
(22) Date de dépôt: 02.07.2013
(51) Int. Cl.: B65B 37/02, B65B 39/00, B65B 1/06, B65B 1/28, B65B 1/34, B65D 47/26

(54) **DOSEUR, NOTAMMENT DE POUDRE**
DOSIERUNGSVORRICHTUNG, INSBESONDERE FÜR PULVER
DOSING DEVICE, IN PARTICULAR FOR POWDER

(30) Priorité: 04.07.2012 FR 1256404
(43) Date de publication de la demande: 13.05.2015
(73) Titulaire: Commissariat à l'Énergie Atomique et aux Énergies Alternatives, 75015 Paris (FR); CH3, 42122 Saint Marcel De Félines (FR); Ekium, 69500 Bron (FR)
(72) Inventeur: BRENNEIS, Christophe, F-30290 Saint Victor La Coste (FR); GOBIN, François, F-84100 Orange (FR); CHERPIN, Robert, F-69290 ST Genis les Ollières (FR); BOYER, Jean-François, F-69250 Montanay (FR); VIALLE, Cédric, 87400 Eybouleuf (FR); MOREL, Nicolas, 69800 Saint Priest (FR)
(74) Mandataire: Brevalex
(86) Numéro de dépôt international: PCT/EP2013/063883
(87) Numéro de publication internationale: WO 2014/006015

(56) Documents cités:
- EP-A1- 1 902 956
- EP-A1- 2 369 311
- WO-A2-2008/071872

## Description

L'invention présente a trait à un doseur, notamment de poudre, et son utilité est plus particulièrement visible pour des produits dangereux, dont la dissémination doit être évitée et qui doivent souvent être manipulés de l'extérieur d'une enceinte où ils sont confinés, comme une boîte à gants, un caisson blindé ou une cellule blindée.

Le mode usuel de dosage consiste à verser progressivement la quantité voulue du produit, contenu d'abord dans un récipient ou un réservoir, dans un autre récipient généralement posé sur une balance, afin de pouvoir s'arrêter dès que la quantité voulue a été atteinte. Un entonnoir est souvent disposé sur le second récipient pour aider au transvasement. Ce mode de dosage est employé pour tous les produits à doser, y compris ceux qu'on a indiqué ci-dessus et qui doivent être confinés dans une enceinte de protection, la manipulation se faisant alors soit par l'intermédiaire d'un gant fixé à l'enceinte et la traversant, soit par un télémanipulateur. Il est pourtant manifeste qu'il présente des risques d'accidents ou d'erreurs de dosage découlant de mauvaises inclinaisons du réservoir d'origine du produit, d'arrêts du transvasement trop tardifs, ou de disséminations du produit par projections accidentelles ou par rémanence sur l'entonnoir. Ces risques sont plus importants quand les poudres sont compactes ou collantes, ce qui réduit leur capacité à s'écouler, alors que les expédients qu'on peut envisager, comme secouer le réservoir ou tapoter sur lui, ont une efficacité imprévisible et peuvent aussi mener à une accélération trop brutale de l'écoulement ; ou quand les réservoirs sont lourds; ou quand le dosage s'effectue par un télémanipulateur ou à travers un gant, donc avec une adresse réduite ou une visibilité moins bonne.

Il existe aussi des doseurs mécaniques où les manipulations du réservoir d'origine du produit et les aléas et risques associés sont réduits. On peut citer le document US-A-4 836 417 dans lequel la poudre est versée dans une trémie comprenant un col inférieur de distribution. La trémie est posée sur un diaphragme que le col traverse, et ce diaphragme est muni de générateurs piézoélectriques de vibration. Les vibrations communiquées au diaphragme sont transmises au goulot de manière à ébranler la poudre et à favoriser son écoulement par le goulot. Ce dispositif ne permet toutefois pas de maîtriser facilement les caractéristiques de l'écoulement et notamment son débit, et il faut quand même prendre des précautions contre la dissémination du produit, le col restant sans cesse ouvert.

Un autre document décrivant un doseur est WO-A-2008/071 872. Le réservoir d'origine du produit comprend un bouchon à son ouverture ; ce bouchon est muni d'un orifice et d'un mécanisme mobile pour fermer complètement ou ouvrir l'orifice à volonté et, ici encore, faire varier les caractéristiques de l'écoulement. Des manipulations plus compliquées, mais automatisables, restent toutefois nécessaires pour agir sur ce mécanisme d'ouverture du bouchon, ce qui réduit l'intérêt de ce dispositif pour des utilisations en enceinte confinée ; il a plutôt été conçu pour l'industrie pharmaceutique.

Le sujet de l'invention est un doseur d'un genre différent, remarquable en ce qu'il évite les disséminations de produits, permet d'ajuster relativement facilement le débit de l'écoulement, et en ce qu'il est facilement et sans risque manipulable à distance, même par des moyens mécaniques rudimentaires.

Sous une forme générale, l'invention concerne un doseur comprenant un réservoir ayant une ouverture, un bouchon disposé à l'ouverture du réservoir et un premier orifice et ayant un mécanisme mobile sur le premier orifice du bouchon pour ouvrir ou fermer à volonté le bouchon et ainsi le doseur; caractérisé en ce que le bouchon comprend : une première partie externe, disposée autour d'un raccordement au réservoir, le raccordement étant placé à l'ouverture du réservoir, de façon à pouvoir tourner autour dudit raccordement et comprenant encore une partie d'obturation disposée aussi devant l'ouverture et munie du premier orifice ; et une seconde partie externe, disposée devant la partie d'obturation et comprenant un second orifice, en pouvant tourner par rapport à la première partie externe de façon à donner à volonté une superposition de superficie variable, ou une absence de superposition, du second orifice sur le premier orifice.

Une rotation sur la seconde partie externe du bouchon permet de l'ouvrir au degré désiré, alors que, comme la première partie externe du bouchon est tournante par rapport au réservoir, celui-ci peut être tourné pour favoriser le brassage du contenu et son écoulement. L'utilisation de moyens simples de rotation entre le réservoir et les parties du bouchon permet une manipulation facile, même par des appareils rudimentaires ; et le mouvement, favorisant le brassage de son contenu, du réservoir peut être accompli en continu pendant toute la durée du dosage.

Le bouchon peut encore comporter une partie du raccordement, assemblée au réservoir autour de l'ouverture, possédant un passage la traversant et menant à l'extérieur, et possédant aussi le raccordement. Avec une telle construction, le bouchon est facilement amovible et peut être remplacé par un bouchon classique d'obturation complète, qui confine bien le produit dans le réservoir, en dehors des périodes de dosage.

La partie de raccordement peut être assemblée au réservoir par un ajustement de parties lisses concentriques, par un écrou de vissage et un contre-écrou, l'écrou de vissage étant porté par l'un du réservoir et de la partie de raccordement de façon à pouvoir tourner librement, l'écrou de vissage et le contre-écrou étant vissés sur un filet établi sur l'autre du réservoir et de la partie de raccordement.

Cet agencement est très fiable pour empêcher les desserrages accidentels, tout en utilisant encore un mouvement tournant pour réaliser l'assemblage ou la séparation.

Il est avantageux encore que la première partie externe comprenne une tige s'étendant dans le réservoir à travers l'ouverture, afin, ici aussi, d'accentuer le remuement ou le brassage du produit.

La partie de raccordement est avantageusement munie d'une bague circulaire, et la première partie externe comprend alors un assemblage de deux parties enserrant ensemble la bague ; de même, la première partie externe comprend avantageusement une seconde bague circulaire, et la seconde partie externe comprend un assemblage de deux parties enserrant ensemble la seconde bague. Dans de telles constructions, notamment si les parties assemblées sont vissées de façon réglable et éventuellement bloquées par un contre-écrou, le jeu entre ces parties assemblées et les bagues peut être réglé à une valeur assez faible pour réduire à presque rien la quantité de produit qui peut s'y immiscer par dissémination. Ceci permet de limiter la rétention, c'est-à-dire la quantité de poudre présente à l'intérieur du mécanisme du système de dosage lorsque le réservoir a été vidé.

Un autre aspect de l'invention est un ensemble de dosage comprenant le doseur précédent, ainsi qu'une machine comprenant un châssis de surélévation comprenant lui-même un support traversé par un perçage vertical, le doseur comprenant des reliefs d'appui sur le support autour du perçage, le perçage contenant alors le bouchon, et la machine comprend encore un système d'immobilisation du bouchon et un système de mise en rotation du réservoir. Et avantageusement, le bouchon et le perçage possèdent des premiers reliefs mutuellement imbriqués qui maintiennent le bouchon immobilisé contre des rotations ; les premiers reliefs du bouchon sont placés sur la première partie externe, la seconde partie externe et un anneau délimitant le perçage et tournant dans le support possèdent des seconds reliefs mutuellement imbriqués qui les maintiennent solidaires en rotation tout en permettant de tourner la seconde partie externe par rapport à la première partie externe ; et le doseur est muni de troisièmes reliefs d'appui sur le support autour du perçage, le bouchon affleurant sous le support (46).

L'invention sera maintenant décrite dans ses différents aspects en liaison aux figures suivantes, qui en représentent une illustration purement illustrative :
- la figure 1 schématise le procédé de dosage ;
- les figures 2 et 3 illustrent le doseur ;
- les figures 4 et 5, l'extrémité du doseur par laquelle le produit est distribué ;
- les figures 6 et 7, la machine associée au doseur pour réaliser le dosage ;
- la figure 8, une représentation de la tige remueuse ;
- et la figure 9, une autre vue de la machine.

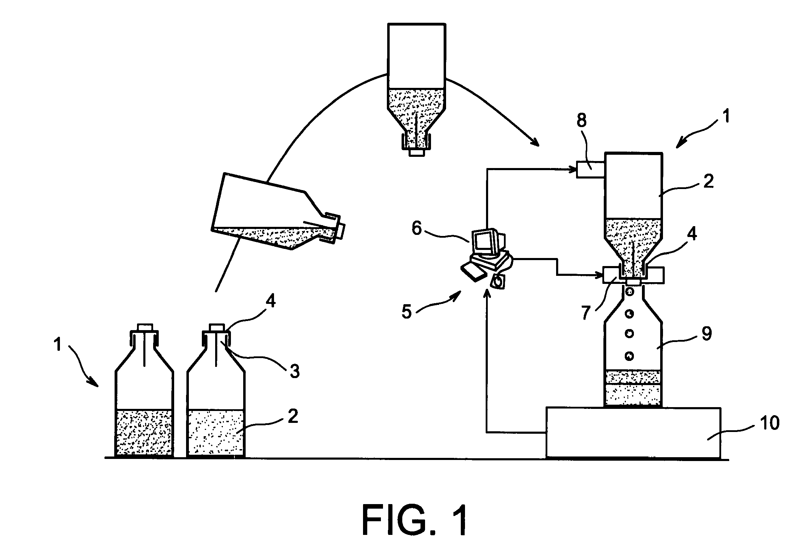

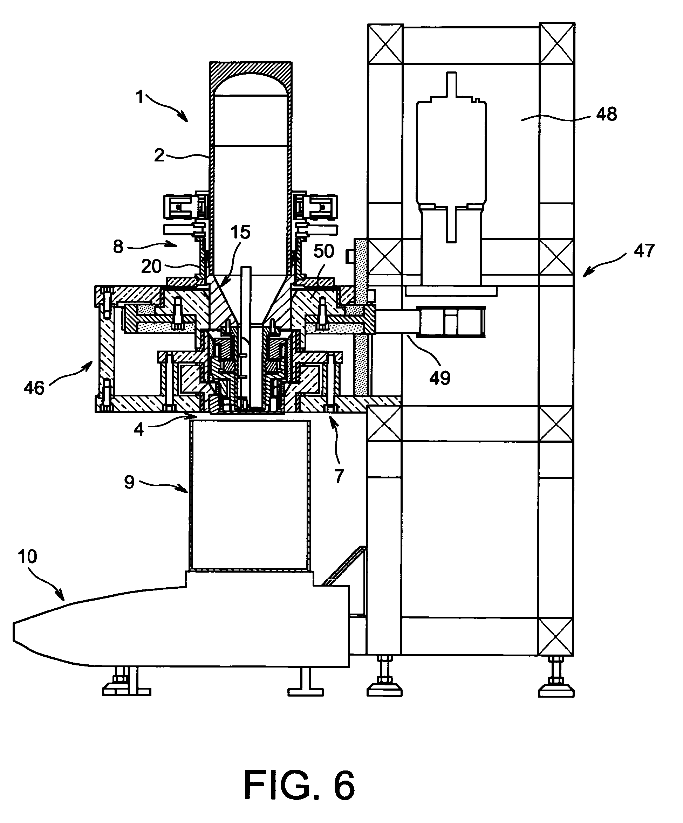

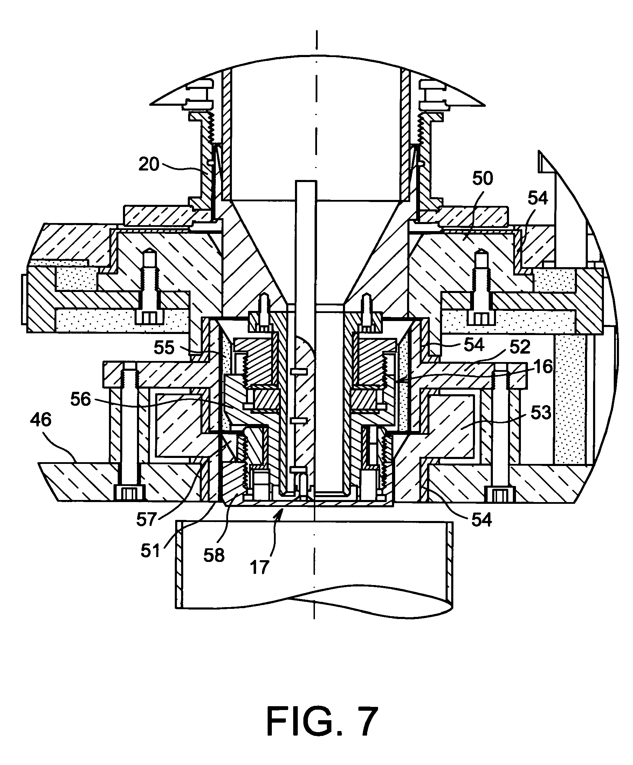

La figure 1 représente schématiquement la façon dont le procédé de dosage est effectué. Les doseurs 1 sont posés dans une enceinte confinée ou plus généralement un lieu quelconque et comprennent chacun un réservoir 2 ayant une ouverture supérieure 3 close par un bouchon 4. Quand le contenu d'un des doseurs 1 doit être dosé, le doseur 1 est saisi et apporté à une machine 5 à décrire aux figures 6 et 7, comprenant un pilote 6, un système d'immobilisation 7 et un système de mise en rotation 8, tous deux montés sur un support non représenté. Un récipient de réception 9 posé sur une balance 10 s'étend sous le système d'immobilisation 7. Le doseur 1 est retourné et installé dans la machine 5 de façon que son bouchon 4 s'étende à travers le système d'immobilisation 7 et que son réservoir 2 puisse être tourné par le système de mise en rotation 8. Le bouchon 4 ayant été ouvert de la façon qu'on détaillera plus loin, le contenu du doseur 1 s'écoule dans le récipient de réception 9 avec les caractéristiques souhaitées.

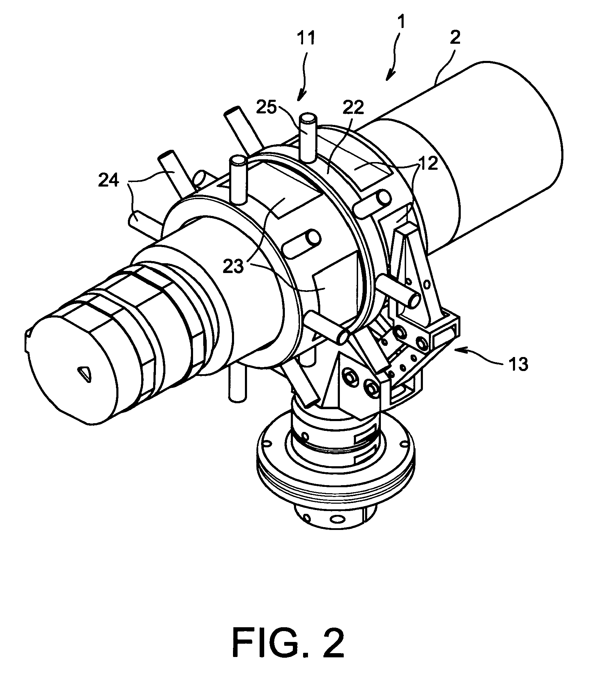

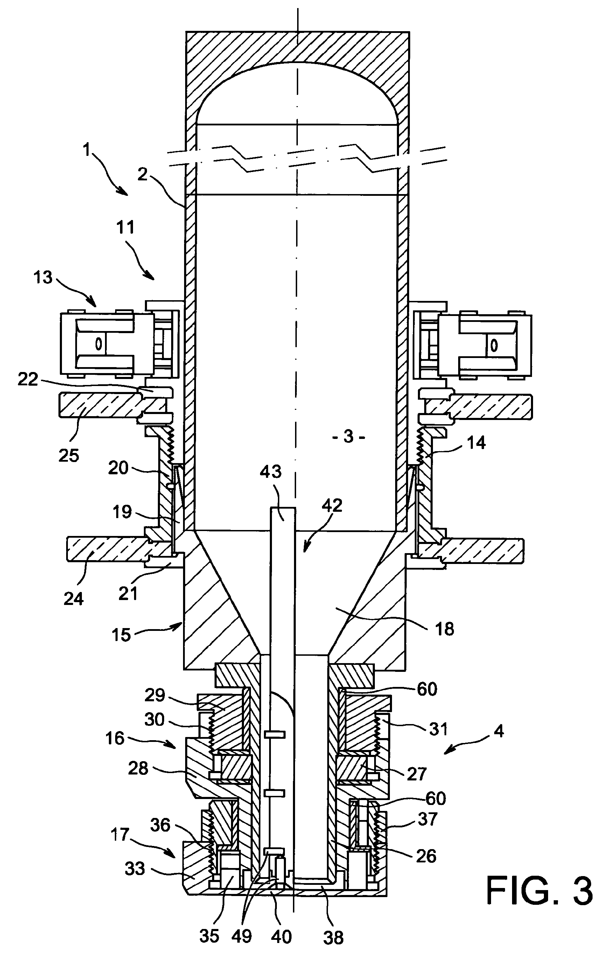

Le bouchon 4 est représenté aux figures 2 et 3, en vue extérieure et en coupe. Le réservoir 2 est essentiellement cylindrique, tout en comprenant une portion périphérique 11 établie autour de sa paroi extérieure et qui comprend des facettes planes 12, quatre ici, destinées à la préhension par une pince de télémanipulation 13, et un filet 14 proche de l'ouverture du réservoir 2. Le bouchon 4 comprend trois parties, mutuellement mobiles entre elles, dont une partie de raccordement 15, une première partie externe 16 et une seconde partie externe 17. La partie de raccordement 15 est traversée de part en part par un passage 18 donnant dans le réservoir 2. Sa forme générale est faite de gradins et elle s'affine vers l'extérieur à partir d'une portion cylindrique 19 lisse de raccordement au réservoir 2, s'engageant avec un très petit jeu autour de l'extrémité, également lisse, de la paroi de ce dernier qui lui est concentrique. Un écrou 20 tourne autour de la portion cylindrique 19, tout en étant retenu axialement sur elle, notamment en butant sur un épaulement 21 menant au gradin suivant. Le raccordement est réalisé quand l'écrou 20 est engagé sur le filet 14. Un contre-écrou 22 est mobile sur le filet 14 devant l'extrémité de l'écrou 20 et peut être serré sur lui, afin de rendre un desserrage involontaire impossible. L'écrou 20 est muni de facettes 23 de préhension analogues aux facettes 12 et servant au transport du bouchon 4. Il est également muni de tiges de cabestan 24, réparties sur sa périphérie, afin de permettre de le tourner facilement. Le contre-écrou 22 est muni de tiges de cabestan 25 analogues. Ces tiges de cabestan 24 peuvent être démontables comme indémontables. L'état de surface des pièces représentant le volume intérieur du doseur sera très soigné, afin de faciliter l'écoulement de la poudre.

La portion extrême de la partie de raccordement 15 est un col 26 de distribution à peu près lisse mais qui comporte toutefois une bague 27 saillant vers l'extérieur et autour de laquelle la première partie externe 16 du bouchon 4 est installée : la première partie externe 16 est principalement composée de deux portions assemblées 28 et 29, établies de part et d'autre de la bague 27, la chevauchant et jointes entre elles par un filet 30 ; cet assemblage permet d'installer la première partie externe 16 autour de la bague 27 avec un jeu assez faible pour contrarier l'immixtion d'impuretés et notamment de matières disséminées provenant du chargement du doseur 1 ou d'un chargement antérieur tout en permettant à la première partie externe 16 de tourner autour de la partie de raccordement 15 et d'un axe coaxial au passage 18. Un contre-écrou 31 est placé sur le filet 30, pour, comme précédemment, immobiliser les portions assemblées 28 et 29 à la position voulue en les coinçant. La rotation des pièces entre elles est favorisée par la présence de paliers 60.

La seconde partie externe 17 comprend de même deux portions assemblées 33 et 34, s'étendant de part et d'autre d'une seconde bague 35, établie elle sur la première partie externe 16 du côté extérieur; les parties assemblées 33, 34 sont encore jointes par un filet 36 et maintenues en place par un contre-écrou 37 établi sur le filet 36. Ici encore, un réglage du jeu axial entre la seconde bague 35 et les parties assemblées 33, 34 est recherché afin de contrarier l'entrée de matières disséminées.

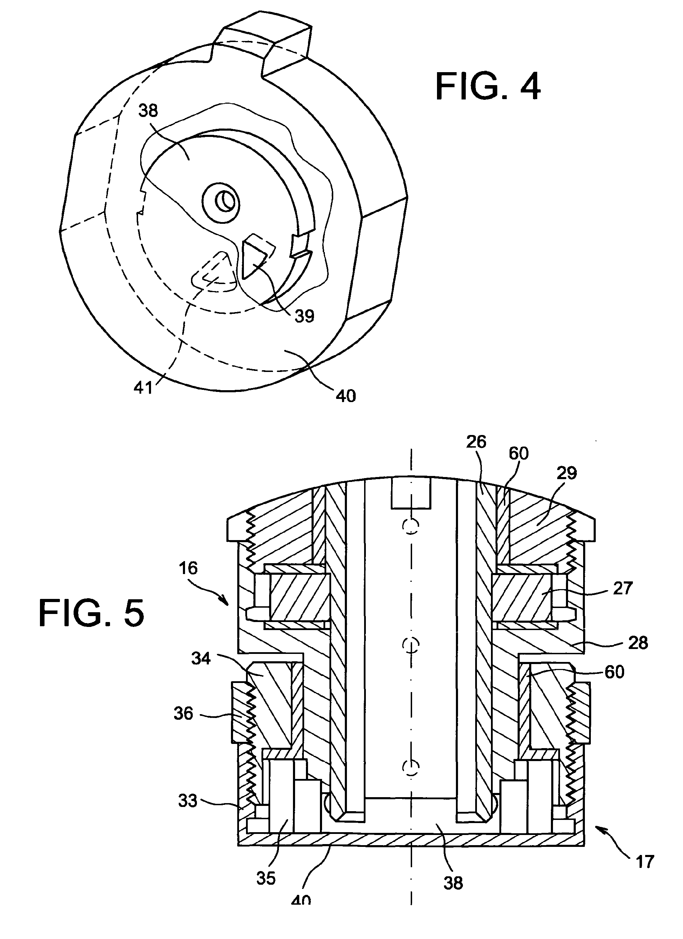

On passe au commentaire des figures 4 et 5. La première partie externe 16 comprend une partie d'obturation 38 devant l'extrémité de sortie du passage 18, munie d'un premier orifice 39 de sortie du contenu du doseur 1. La seconde partie externe 17 comprend une partie d'obturation 40 couvrant la précédente et munie d'un second orifice 41, également de section triangulaire. Les orifices 39 et 41 étant à des rayons semblables, la rotation des parties externes 16 et 17 l'une sur l'autre permet à volonté de maintenir le doseur parfaitement fermé, en évitant une superposition des orifices 39 et 41, ou au contraire d'ouvrir plus ou moins ce doseur en établissant une superposition desdits orifices et en faisant varier la superficie de cette superposition.

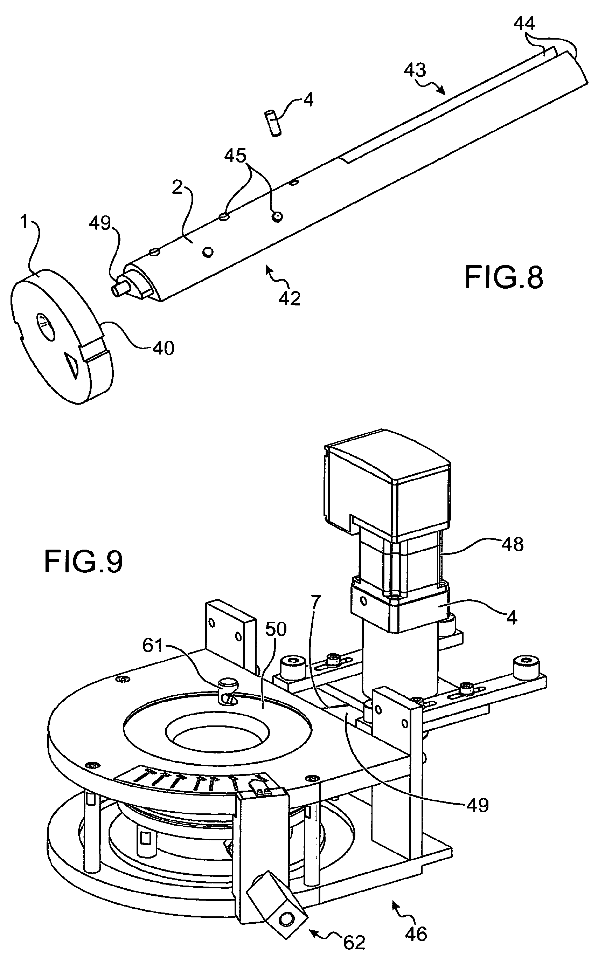

Le bouchon 4 comprend encore une tige remueuse 42, solidaire de la première partie d'obturation 38 et qui s'étend à l'intérieur du passage 18, en occupant une partie seulement de sa section jusque dans le réservoir 2, afin d'aider au brassage de la poudre et à son écoulement lorsque le réservoir 2 est mis en rotation. La tige remueuse 42 (figure 8) a une section en demi-lune et à la convexité adjacente au bord du passage 18, mais dont l'extrémité, située dans le réservoir 2, possède un évidement 43 séparant la tige remueuse 42 en deux branches parallèles 44. Plusieurs ergots 45 sont disposés le long de la tige remueuse 42. Ces dispositions permettent de faciliter le brassage de la poudre. Un autre ergot 45 fixe la tige remueuse 42 à la partie d'obturation 40.

Ce doseur n'est pas utilisé seul en principe, mais en coopération avec la machine 5 pour former un ensemble de dosage, dont la description sera maintenant décrite au moyen des figures 6 et 7.

Le doseur 1 est retourné et posé sur un support 46 saillant d'un côté d'un châssis 47 de la machine 5. Le récipient de réception 9 et la balance 10 sur laquelle il est posé sont situés sous le support 46. Le système de mise en rotation 8 comprend un moteur 48 monté sur le châssis 47, une transmission 49, et un plateau 50 tournant dans le support 46 autour d'un axe vertical et sur lequel l'écrou 20 engagé autour de la portion cylindrique 19 de la partie de raccordement 15 au réservoir 2 est posé. La transmission peut consister en une courroie tendue entre deux poulies, dont l'une dépend de l'arbre de sortie du moteur 48 et l'autre du plateau 50. Il est ainsi possible de faire tourner continuellement le réservoir 2 et la partie de raccordement 15 pendant le dosage. Comme le support 46 et 50 est traversé complètement par un perçage 51 vertical, le bouchon 4 affleure sous le support 46 et s'étend immédiatement au-dessus du récipient de réception 9. Le perçage 51 est formé plus précisément à travers le plateau 50 ainsi qu'à travers une douille 52 et un anneau 53 qui reçoivent respectivement la première partie externe 16 et la seconde partie externe 17. La douille 52 est fixe par rapport au support 46, mais l'anneau 53 tourne par rapport à lui, comme le plateau 50. Des paliers, tous référencés par 54, relient le support 46 au plateau 50 et à l'anneau 53, et la douille 52 aux mêmes, et permettent donc ces rotations. La vitesse de rotation étant variable, il est possible de réaliser le dosage en plusieurs étapes :
- ouverture maximale et vitesse de rotation maximale jusqu'à l'approche de la quantité de poudre dosée souhaitée (ce qui apporte un gain de temps) ;
- réduction de l'ouverture et de la vitesse pour obtenir la quantité précise de poudre dosée souhaitée (ce qui apporte un gain de précision) ;
- fermeture de l'ouverture lorsque la consigne est atteinte, arrêt de la rotation.

Il est à noter que ces opérations peuvent être entièrement automatisées : il suffit pour cela de remplacer la tige de réglage de l'ouverture par une seconde motorisation, commandée par l'ordinateur de contrôle-commande).

La douille 52 comprend une rainure 55 recevant un ergot 56 de la première partie externe 16, et, de même, l'anneau 53 comprend une rainure 57 recevant un ergot de la seconde partie externe 17. Grâce à cette disposition, la première partie externe 16 est fixe en rotation et, comme l'anneau 53 est libre, il reste normalement fixe, mais il peut être tourné à volonté avec la seconde partie externe 17 du bouchon 4, afin d'ajuster selon les besoins d'ouverture du doseur 1. Un pion 61 érigé sur le plateau 50 (figure 9) reçoit une des tiges de cabestan 24 en butée, et garantit l'entraînement en rotation sans patinage du doseur 1. Un dispositif 62, à graduations et vernier par exemple, peut être ajouté sur l'anneau 53 et le châssis 46 pour exprimer cette ouverture de façon immédiatement compréhensible. L'état de référence du bouchon 4 est fourni par les ergots 56 et 58, coopérant avec les rainures 55 et 57 ; celles-ci comme ceux-là sont alors alignés.

Une application envisagée pour l'invention est le dosage de poudres radioactives. Les doseurs 1 sont blindés en conséquence dans la réalisation effectivement représentée. Des dosages d'autres poudres et de produits à d'autres états fluides sont possibles.

Le bouchon 4 présente normalement un hermétisme suffisant, ce qui permet de manipuler et d'incliner les doseurs 1 sans risque. Il peut toutefois être remplacé si nécessaire par un autre bouchon, non représenté, en dehors des périodes de dosage. Un tel bouchon présenterait une partie de raccordement semblable à la partie 19 du bouchon 4 présent et une partie d'obturation continue.

On a décrit ici une réalisation où le bouchon 4 était métallique. Un bouchon en polymère ne serait point à exclure ; sa forme serait identique, mais le nombre de pièces pourrait être réduit et sa structure serait donc simplifiée grâce à la facilité plus grande de construire des pièces de forme plus complexe par moulage et à la possibilité de réaliser des assemblages par encliquetage.

## Revendications

1. Doseur (1) comprenant un réservoir (2) ayant une ouverture (3), un bouchon (4) disposé à l'ouverture du réservoir et ayant un premier orifice, et un mécanisme mobile sur le premier orifice du bouchon pour ouvrir ou fermer à volonté le bouchon et ainsi le doseur; **caractérisé en ce que** le bouchon comprend : une première partie externe (16), disposée autour d'un raccordement (15) au réservoir (2), le raccordement étant placé à l'ouverture (3) du réservoir (2), de façon à pouvoir tourner autour dudit raccordement, et comprenant encore une partie d'obturation (38) disposée aussi devant l'ouverture et munie du premier orifice (39) ; et une seconde partie externe (17), disposée devant la partie d'obturation (39) et comprenant un second orifice (41), en pouvant tourner par rapport à la première partie externe de façon à donner à volonté une superposition de superficie variable, ou une absence de superposition, du second orifice (41) sur le premier orifice (39).

2. Doseur suivant la revendication 1, **caractérisé en ce que** le bouchon comporte encore une partie de raccordement (15), assemblée au réservoir (2) autour de l'ouverture (3), possédant un passage (18) la traversant et menant dans le réservoir, et possédant aussi ledit raccordement.

3. Doseur suivant la revendication 2, **caractérisé en ce que** la partie de raccordement est assemblée au réservoir par un ajustement de parties lisses (19) concentriques, par un écrou de vissage (20) et un contre-écrou (22), l'écrou de vissage (20) étant porté par l'un du réservoir (2) et de la partie de raccordement (15) de façon à pouvoir tourner librement, et l'écrou de vissage et le contre-écrou étant vissés sur un filet (14) établi sur l'autre du réservoir et de la partie de raccordement.

4. Doseur suivant l'une quelconque des revendications 1 à 3, **caractérisé en ce que** la première partie externe (16) comprend une tige remueuse (42) s'étendant dans le réservoir à travers l'ouverture (3).

5. Doseur suivant l'une quelconque des revendications 1 à 4, **caractérisé en ce que** le raccordement comprend une bague (27) circulaire, et la première partie externe (16) comprend un assemblage de deux parties (28, 29) enserrant ensemble la bague.

6. Doseur suivant l'une quelconque des revendications 1 à 5, **caractérisé en ce que** la première partie externe (16) comprend une seconde bague (35) circulaire, et la seconde partie externe (17) comprend un assemblage de deux parties (33, 34) enserrant ensemble la seconde bague.

7. Doseur suivant la revendication 4, **caractérisé en ce que** la tige remueuse a une section en demi-lune, divisée en deux branches (44) à une extrémité s'étendant dans le réservoir (2), et est munie d'ergots (45) saillants.

8. Doseur suivant la revendication 3, **caractérisé en ce que** la seconde partie externe (17) comprend deux portions assemblées (33, 34) s'étendant de part et d'autre d'une seconde bague (35) établie sur un côté extérieur de la première partie externe (16), jointes par un filet (36) et maintenues en place par un contre-écrou (37) établi sur le filet (36).

9. Ensemble de dosage comprenant un doseur selon l'une quelconque des revendications 1 à 8 ainsi qu'une machine (5) comprenant un châssis (47) de surélévation comprenant lui-même un support (46) traversé par un perçage (51) vertical, le doseur (1) comprenant des reliefs (20) d'appui sur le support (46) autour du perçage (51), le perçage (51) contenant alors le bouchon, et la machine (5) comprend encore un système d'immobilisation (7) du bouchon (4) et un système de mise en rotation (8) du réservoir (2).

10. Ensemble de dosage suivant la revendication 9, **caractérisé en ce que** le bouchon (4) et le perçage (51) possèdent des premiers reliefs (55, 56) mutuellement imbriqués qui maintiennent le bouchon (4) immobilisé contre des rotations.

11. Ensemble de dosage suivant la revendication 10, **caractérisé en ce que** les premiers reliefs du bouchon sont placés sur la première partie externe, et **en ce que** la seconde partie externe (17) et un anneau (53) délimitant le perçage (52) et tournant dans le support (46) possèdent des seconds reliefs (57, 58) mutuellement imbriqués qui les maintiennent solidaires en rotation tout en permettant de tourner la seconde partie externe par rapport à la première partie externe.

12. Ensemble de dosage suivant l'une quelconque des revendications 9 à 11, **caractérisé en ce que** le doseur (1) est muni de troisièmes reliefs d'appui sur le support (46) autour du perçage (51), le bouchon (4) affleurant sous le support (46).

13. Ensemble de dosage suivant l'une quelconque des revendications 9 à 12, **caractérisé en ce que** le système de mise en rotation (8) du réservoir (2) est à vitesse variable.

## Patentansprüche

1. Dosiereinrichtung (1), aufweisend einen Behälter (2) mit einer Öffnung (3), eine Verschlusskappe (4), die an der Öffnung des Behälters angeordnet ist und eine erste Öffnung aufweist, und einen beweglichen Mechanismus an der ersten Öffnung der Verschlusskappe, um die Verschlusskappe und somit die Dosiervorrichtung nach Belieben zu öffnen oder zu schließen; **dadurch gekennzeichnet, dass** die Verschlusskappe aufweist: einen ersten äußeren Teil (16), der herum um einen Anschluss (15) zum Behälter (2) angeordnet ist, wobei der Anschluss an der Öffnung (3) des Behälters (2) angeordnet ist, so dass ein Drehen um den Anschluss möglich ist, und weiter aufweisend einen Absperrteil (38), der ebenfalls vor der Öffnung angeordnet ist und mit einer ersten Öffnung (39) versehen ist; und einen zweiten äußeren Teil (17), der vor dem Absperrteil (39) angeordnet ist und eine zweite Öffnung (41) aufweist, wobei er sich bezüglich des ersten äußeren Teils drehen kann, so dass er nach Belieben eine variable Flächenüberlagerung, oder eine nicht vorhandene Überlagerung, der zweiten Öffnung (41) und der ersten Öffnung (39) liefert.

2. Dosiervorrichtung nach Anspruch 1, **dadurch gekennzeichnet, dass** die Verschlusskappe weiter einen Anschlussteil (15) aufweist, der am Behälter (2) um die Öffnung (3) herum montiert ist und der über einen Durchlass (18) verfügt, welcher sich durch diesen hindurch erstreckt und in den Behälter hineinführt, und auch über den Anschluss verfügt.

3. Dosiervorrichtung nach Anspruch 2, **dadurch gekennzeichnet, dass** der Anschlussteil am Behälter mittels einer Passung von ebenen konzentrischen Teilen (19) montiert ist, und zwar mittels einer Schraubenmutter (20) und einer Kontermutter (22), wobei die Schraubenmutter (20) durch das eine, und zwar von dem Behälter (2) und dem Anschlussteil (15), getragen wird, so dass sie frei drehen kann, und die Schraubenmutter und die Kontermutter auf ein Gewinde (14) aufgeschraubt sind, das auf dem anderen, und zwar von dem Behälter und dem Anschlussteil, ausgebildet ist.

4. Dosiervorrichtung nach einem der Ansprüche 1 bis 3, **dadurch gekennzeichnet, dass** der erste äußere Teil (16) eine Rührstange (42) aufweist, die sich in dem Behälter durch die Öffnung (3) hindurch erstreckt.

5. Dosiervorrichtung nach einem der Ansprüche 1 bis 4, **dadurch gekennzeichnet, dass** der Anschluss einen kreisförmigen Ring (27) aufweist, und der erste äußere Teil (16) eine Baugruppe aus zwei Teilen (28, 29) aufweist, die den Ring gemeinsam einspannen.

6. Dosiervorrichtung nach einem der Ansprüche 1 bis 5, **dadurch gekennzeichnet, dass** der erste äußere Teil (16) einen zweiten kreisförmigen Ring (35) aufweist, und der zweite äußere Teil (16) eine Baugruppe aus zwei Teilen (33, 34) aufweist, die den zweiten Ring gemeinsam einspannen.

7. Dosiervorrichtung nach Anspruch 4, **dadurch gekennzeichnet, dass** die Rührstange einen halbmondförmigen Querschnitt aufweist, der an einem sich in den Behälter (2) erstreckenden Ende in zwei Äste (44) unterteilt ist, und mit vorspringenden Zapfen (45) versehen ist.

8. Dosiervorrichtung nach Anspruch 3, **dadurch gekennzeichnet, dass** der zweite äußere Teil (17) zwei zusammenmontierte Abschnitte (33, 34) aufweist, die sich zu beiden Seiten eines zweiten Rings 35 erstrecken, der auf einer Seite außerhalb des ersten äußeren Teils (16) angeordnet ist, und die durch ein Gewinde (36) verbunden sind und durch eine auf dem Gewinde (36) festgelegten Kontermutter (37) an ihrem Platz gehalten werden.

9. Einheit zur Dosierung, aufweisend eine Dosiereinrichtung nach einem der Ansprüche 1 bis 8 sowie eine Maschine (5), die einen Aufstelzungsrahmen (47) aufweist, der seinerseits einen von einer vertikalen Bohrung (51) durchzogenen Träger (46) aufweist, wobei die Dosiereinrichtung (1) Erhöhungen (20) zur Auflage auf dem Träger (46) um die Bohrung (51) herum aufweist, wobei die Bohrung (51) dann die Verschlusskappe umfasst, und die Maschine (5) weiter ein System zur Blockierung (7) der Verschlusskappe (4) und ein System zum In-Drehung-Versetzen (8) des Behälters (2) aufweist.

10. Einheit zur Dosierung nach Anspruch 9, **dadurch gekennzeichnet, dass** die Verschlusskappe (4) und die Bohrung (51) ineinandergreifende erste Erhöhungen (55, 56) aufweisen, welche die Verschlusskappe (4) gegen Drehung blockiert halten.

11. Einheit zur Dosierung nach Anspruch 10, **dadurch gekennzeichnet, dass** die ersten Erhöhungen der Verschlusskappe auf dem ersten äußeren Teil angeordnet sind, und dass der zweite äußere Teil (17) und ein Ring (53), der die Bohrung (52) begrenzt und sich in dem Träger (46) dreht, ineinandergreifende zweite Erhöhungen (57, 58) aufweisen, welche diese drehfest halten und dabei erlauben, den zweiten äußeren Teil bezüglich des ersten äußeren Teils zu drehen.

12. Einheit zur Dosierung nach einem der Ansprüche 9 bis 11, **dadurch gekennzeichnet, dass** die Dosiereinrichtung (1) mit dritten Erhöhungen, zur Auflage auf dem Träger (46) um die Bohrung (51) herum, versehen ist wobei die Verschlusskappe (4) unter dem Träger (46) zutage tritt.

13. Einheit zur Dosierung nach einem der Ansprüche 9 bis 12, **dadurch gekennzeichnet, dass** das System zum In-Drehung-Versetzen (8) des Behälters (2) geschwindigkeitsvariabel ist.

## Claims

1. Dosing device (1) comprising a container (2) having an opening (3), a plug (4) arranged at the opening of the container and having a first orifice, and a mobile mechanism on the first orifice of the plug to open or close as necessary the plug and thus the dosing device; **characterised in that** the plug comprises: a first outer part (16), arranged around a connection (15) to the container (2), the connection being placed at the opening (3) of the container (2), so as to be able to rotate around said connection, and further comprising a sealing part (38) also arranged in front of the opening and provided with the first orifice (39); and a second outer part (17), arranged in front of the sealing part (39) and comprising a second orifice (41), while being able to rotate with respect to the first outer part so as to give as necessary a superposition of variable surface area, or an absence of superposition, of the second orifice (41) over the first orifice (39).

2. Dosing device according to claim 1, **characterised in that** the plug further comprises a connection part (15), assembled to the container (2) around the opening (3), having a passage (18) traversing it and leading into the container, and also having said connection.

3. Dosing device according to claim 2, **characterised in that** the connection part is assembled to the container by an adjustment of concentric smooth parts (19), by a screw down nut (20) and a locknut (22), the screw down nut (20) being borne by one of the container (2) and of the connection part (15) so as to be able to rotate freely, and the screw down nut and the locknut being screwed down onto a thread (14) established on the other of the container and of the connection part.

4. Dosing device according to any one of claims 1 to 3, **characterised in that** the first outer part (16) comprises a stirring rod (42) extending into the container through the opening (3).

5. Dosing device according to any one of claims 1 to 4, **characterised in that** the connection comprises a circular collar (27), and the first outer part (16) comprises an assemblage of two parts (28, 29) clasping together the collar.

6. Dosing device according to any one of claims 1 to 5, **characterised in that** the first outer part (16) comprises a second circular collar (35), and the second outer part (17) comprises an assemblage of two parts (33, 34) clasping together the second collar.

7. Dosing device according to claim 4, **characterised in that** the stirring rod has a semi-circular section, divided into two branches (44) at one end extending into the container (2), and is provided with projecting lugs (45).

8. Dosing device according to claim 3, **characterised in that** the second outer part (17) comprises two assembled portions (33, 34) extending on either side of a second collar (35) established on an exterior side of the first outer part (16), joined by a thread (36) and held in place by a locknut (37) established on the thread (36).

9. Dosing assembly comprising a dosing device according to any one of claims 1 to 8 as well as a machine (5) comprising a raising frame (47) itself comprising a support (46) traversed by a vertical boring (51), the dosing device (1) comprising reliefs (20) resting on the support (46) around the boring (51), the boring (51) then containing the plug, and the machine (5) further comprises a system for immobilising (7) the plug (4) and a system for rotating (8) the container (2).

10. Dosing assembly according to claim 9, **characterised in that** the plug (4) and the boring (51) have mutually imbricated first reliefs (55, 56) which maintain the plug (4) immobilised against rotations.

11. Dosing assembly according to claim 10, **characterised in that** the first reliefs of the plug are placed on the first outer part, and **in that** the second outer part (17) and a ring (53) delimiting the boring (52) and rotating in the support (46) have mutually imbricated second reliefs (57, 58) which maintain them integral in rotation while enabling the second outer part to rotate with respect to the first outer part.

12. Dosing assembly according to any one of claims 9 to 11, **characterised in that** the dosing device (1) is provided with third reliefs resting on the support (46) around the boring (51), the plug (4) being flush under the support (46).

13. Dosing assembly according to any one of claims 9 to 12, **characterised in that** the system for rotating (8) the container (2) is a variable speed system.
